(19) **Europäisches Patentamt**
**European Patent Office**
**Office européen des brevets**

(11)  **EP 3 840 536 B1**

(12)  **EUROPEAN PATENT SPECIFICATION**

(45) Date of publication and mention
of the grant of the patent:
**20.03.2024 Bulletin 2024/12**

(21) Application number: **19217122.1**

(22) Date of filing: **17.12.2019**

(51) International Patent Classification (IPC):
***H05B 45/345*** <sup>(2020.01)</sup>      ***H05B 45/375*** <sup>(2020.01)</sup>

(52) Cooperative Patent Classification (CPC):
**H05B 45/375; H05B 45/345;** Y02B 20/30

(54) **CURRENT MODE SWITCHING REGULATOR CONTROLLER, CURRENT MODE SWITCHING REGULATOR AND METHOD**

STROMMODUSUMSCHALTREGLERSTEUERGERÄT, STROMMODUSSCHALTREGLER UND VERFAHREN

ORGANE DE COMMANDE DE RÉGULATEUR DE COMMUTATION DE MODE DE COURANT, RÉGULATEUR DE COMMUTATION DE MODE DE COURANT ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.06.2021 Bulletin 2021/25**

(73) Proprietor: **Infineon Technologies Austria AG 9500 Villach (AT)**

(72) Inventors:
• **LOHAUS, Lukas**
  **45128 Essen (DE)**
• **LUX, Thomas**
  **40882 Ratingen (DE)**
• **SIMMER, Frank**
  **42651 Solingen (DE)**

(74) Representative: **Kraus & Lederer PartGmbB Thomas-Wimmer-Ring 15 80539 München (DE)**

(56) References cited:
**US-A1- 2015 244 275     US-A1- 2016 036 324 US-B2- 10 056 828**

**Description**

TECHNICAL FIELD

The presented application relates to current mode switching regulator controllers, current mode switching regulators comprising such controllers and to corresponding methods.

BACKGROUND

Current mode switching regulators are used in some applications to supply a current to a load. For example, such regulators may be used to supply light-emitting diodes (LEDs) with current.

Generally, such regulators measure the current through the load. When the current reaches an upper current threshold, a supply stage supplying current to the load is switched off, and when the current then reaches a lower current threshold, the supply stage is switched on again. This may lead to a sawtooth-like current between the upper and the lower current threshold through the load, with an average current, which in an ideal case is an average value of the upper and the lower current threshold.

However, for the control loop which uses the upper and the lower current threshold explained above, a certain loop delay exists, due to the signal propagation from a device measuring the load current (for example a shunt resistor) to a controller, through the controller and from there to the supply stage. This loop delay may lead to overshoots and undershoots, i.e. the load current exceeding the upper current threshold or falling below the lower current threshold. These over- and undershoots may also affect the average current supplied to the load, which is undesirable in applications like LED driving which require very precise currents.

The current overshoot and undershoot and therefore the error of the average current also depends on a duty cycle of the regulation (for example the frequency of the above-mentioned sawtooth-like current curve) and therefore is not a fixed quantity of a given system, but may change during operation.

Some recent solutions to this problem use elaborate regulation and control techniques, which require very precise measurements of one or more parameters like the actual current flow or a voltage of a pin of a controller used to control the switching. Such solutions come at the cost of higher hardware effort, complexity and slower reaction times.

Known current controllers are disclosed in US 2016/036324 A1 and US 10 056 828 B2. T

SUMMARY

The invention is defined by a controller as defined in claim 1 and a method as defined in claim 11.

The dependent claims define further embodiments as well as a current mode switching regulator including such a controller.

The above summary is merely a brief overview over some embodiments and is not to be construed as limiting in any way, as other embodiments may include other features than the ones listed above.

BRIEF DESCRIPTION OF THE DRAWINGS

Fig. 1A is a block diagram of a current mode switching regulator according to an embodiment.

Fig. 1B is a diagram illustrating a current mode switching regulator according to an embodiment.

Fig. 2 is a graph for explaining current overshoot and undershoot, the effects of which are mitigated in some embodiments.

Fig. 3 is a flow chart illustrating a method according to an embodiment.

Fig. 4 is a diagram illustrating various quantities used for explanation of embodiments.

Fig. 5 is a diagram of a controller according to an embodiment.

Fig. 6 is a diagram for illustrating further measurements used in some embodiments.

Fig. 7 is a diagram of a controller according to an embodiment.

Fig. 8 is a diagram of a current mode switching regulator according to a further embodiment.

DETAILED DESCRIPTION

In the following, various embodiments will be described in detail referring to the attached drawings. These embodiments serve illustrative purposes only and are not to be construed as limiting. For example, while embodiments may be described comprising a plurality of features (for example components, elements, acts, events, steps etc.), in other embodiments some of these features may be omitted, and/or may be replaced by alternative features. In addition to the features explicitly shown and described, other features, for example features used in conventional current mode switching regulators, may be provided. For example, some of the embodiments described herein relate to the compensation of current errors caused by a loop delay of a regulation, and apart from such techniques, regulators may be implemented in a conventional manner.

For example, some variations, modifications or details may be described only with respect to one of the embodiments in order to avoid repetitions, but may also be applied to other embodiments. Connections or couplings shown in the drawings or described herein refer to electrical connections or couplings unless noted otherwise. Such connections or couplings may be modified, for example by adding additional intervening elements or by removing elements, as long as the general purpose of the connection or coupling, for example to provide or transmit a certain kind of signal, to provide a control, to transmit a certain information etc. is essentially maintained.

Throughout the figures, corresponding elements bear the same reference numerals and will not be described repeatedly.

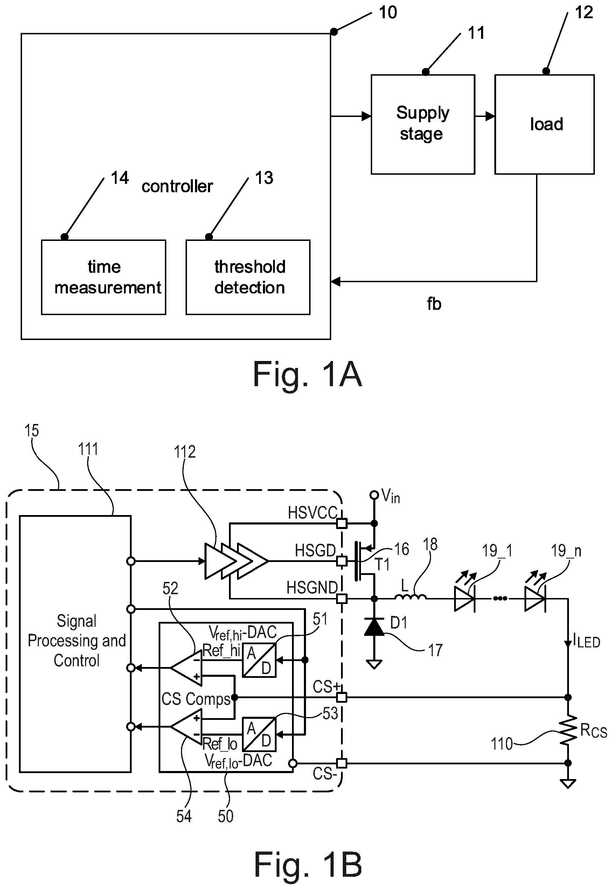

Turning now to the figures, Fig. 1A is a block diagram of a current mode switching regulator according to an embodiment. The embodiment of Fig. 1A comprises a controller 10 that controls a supply stage 11. Supply stage 11 provides a current to a load 12. A feedback signal fb indicative of the current through the load is fed back to controller 10. Feedback signal fb may be generated by any suitably circuitry, for example current sensing circuitry. In a threshold detection part 13 of controller 10, the current through the load as indicated by the feedback signal fb is compared with an upper current threshold and a lower current threshold. Essentially, when the current exceeds the upper current threshold, supply stage 11 is switched off. Furthermore, when the current through the load falls below the lower current threshold, supply stage 11 is switched on.

In this way, the current through the load 12 may be regulated.

Without further measures, the control loop established through the feedback signal fb and controller 10 controlling supply stage 11 in response to the feedback signal introduces a loop delay, which may lead to overshoots and undershoots.

In embodiments, controller 10 comprises a time measurement part 14 for measuring an on-time $t_{on}$ of the supply stage 11 and an off-time $t_{off}$ of the supply stage 11. The on-time and the off-time may be measured based on the threshold detection in threshold detection part 13. It should be noted that while the actual switching of supply stage 11 through the loop delay may be later than the actual exceeding of the upper current threshold, and likewise the switching on again due to the loop delay may be later than the actual falling below of the current through the load below the lower current threshold, as the loop delay is the same in both cases, the on- and off-times may still be measured essentially without influence of the loop delay. Based on the measured on- and off-times, the control is modified to compensate for overshoots and undershoots caused by the loop delay, for example by modifying the upper current thresholds and lower current thresholds used from their nominal values. Detailed examples for this kind of compensation will be explained further below.

Controller 10 may be a controller comprising analog and digital parts. Completely analog or completely digital implementations are also possible in some embodiments. For example, the threshold detection part 13 may be performed using at least some analog circuitry, for example comparators for comparing voltages or currents. In other embodiments, where the feedback signal fb is provided as a digital signal using e.g. a sufficiently fast analog to digital converter in a current sensing circuitry, threshold detection part 13 may be implemented digitally. The time measurement part may be implemented using digital circuitry, for example digital counters. A calculation of compensation values for the upper and lower current thresholds may then also be performed digitally.

To achieve this, controller 10 may be implemented in any suitable manner. For example, a digital part of controller 10 may be implemented using a digital signal processor, an application specific integrated circuit, a microcontroller, a microprocessor or similar devices, which allow digital calculations, counting and other digital signal processing. Analog portions may be implemented using digital-to-analog converters, analog comparators or other analog circuitry like transistor drivers outputting a driving signal for supply stage 11. In other embodiments, such drivers may be external to controller 10, and controller 10 may only comprise the control circuit (for example implemented digitally) to control such drivers. Generally, describing or defining a controller as comprising different parts or circuits is to be understood as the controller including parts of circuits providing the respective functions, but does not imply that the parts or circuits are implemented as physically separate blocks. For example, various parts or circuits may be implemented by programming a microcontroller or other digital device accordingly. Some examples will be discussed next referring to Fig. 1B.

Fig. 1B illustrates a current mode switching regulator according to an embodiment. The current mode switching regulator of Fig. 1B is used to supply a chain of light-emitting diodes 19_1..., 19_n with power. Light-emitting diodes 19_1..., 19_n will be collectively referred to as light-emitting diodes 19 in the following. While two light-emitting diodes 19 are explicitly shown in Fig. 1B, the chain of light-emitting diodes may comprise a higher number of light-emitting diodes.

The embodiment of Fig. 1B furthermore comprises a controller 15, which controls a supply stage comprising a transistor 16, a diode 17 and an inductor 18. When transistor 16 is turned on by controller 15, light-emitting diodes 19 are coupled to a supply voltage $V_{in}$ via inductor 18. When transistor 16 is switched off, inductor 18 and light-emitting diodes 19 are decoupled from voltage $V_{in}$. Nevertheless, still a current may flow for some time e.g. due to energy stored in inductor 18. The configuration of Fig. 1B is only an example, and other conventional supply stages and current mode controlled converter topologies including synchronous and asynchronous converters may also be used. For example, for a synchronous buck converter diode 17 may be replaced by further transistor acting as a switch controlled by controller 15, or even more transistors (e.g. 4 transistors for a synchronous buck-boost converter) may be used. In this respect, "switching off the supply stage" generally refers to stopping providing power from a supply voltage to the output, and "switching on the supply stage" refers to starting providing power from a supply voltage to the output, and may involve various switching schemes of a plurality of transistors of a supply stage.

A current $I_{LED}$ flowing through light-emitting diodes 19, which is an example for a load current, is measured using a shunt resistor 110 having a resistance value $R_{CS}$. A voltage drop across shunt resistor 110 is indicative of the current $I_{LED}$ and is an example for feedback signal fb of Fig. 1A. The voltage across resistor 110 is supplied to controller 15 at terminals CS+, CS-.

Controller 15 comprises a signal processing and control part 111, which may be implemented using digital circuitry, as explained above for controller 10 of Fig. 1A. Signal processing and control part 111 provides an upper current threshold value to a digital-to-analog converter 51 and a lower current threshold value to a digital-to-analog converter 53 of a threshold detection circuit 50, which is an example for threshold detection part 13 of Fig. 1A.

An output of digital-to-analog converter 51 is provided to a reference input of a comparator 52, and an output of digital-to-analog converter 53 is provided to a reference input of a comparator 54. The voltage at CS+ is provided to sensing inputs of comparators 52, 54. The voltage at CS- corresponds to ground, which may be used as reference ground for threshold detection circuit 50. In other implementations, other connections schemes are possible, e.g. using the voltages at CS+, CS- as differential signals.

Based on threshold crossings detected by comparators 51, 52, signal processing and control part 111 controls a driver 112 to switch transistor 16 on and off. Namely, if the current $I_{LED}$ exceeds the upper threshold current, transistor 16 is switched off, and when the current $I_{LED}$ falls below the lower threshold current, transistor 16 is switched off.

Specifically, when the load current as indicated by the voltage at CS+ crosses the voltage output from digital-to-analog converter 51, an output signal of comparator 52 changes its state (for example from logic 0 to logic 1 or vice versa). When the voltage at CS+ crosses the output voltage of digital-to-analog converter 53, comparator 54 changes its output states. In this way, it may be detected when the current $I_{LED}$ exceeds the upper threshold current or falls below the lower threshold current.

Furthermore, based on the output of comparators 52, 54, signal processing and control part 111 measures the above-mentioned values of $t_{on}$ and $t_{off}$ and modifies the threshold values supplied to digital-to-analog converters 51, 53 based on the measurements. In this way, effects of a loop delay of the control loop controlling transistor 16 based on the current $I_{LED}$ may be reduced in some embodiments.

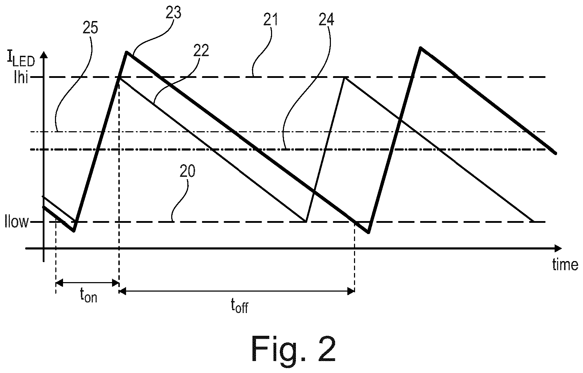

The on-time $t_{on}$, the off-time $t_{off}$ as well as the overshoots and undershoots due to the above-mentioned loop delay of the control loop are further illustrated in Fig. 2.

Fig. 2 generally shows the LED current $I_{LED}$ over time. Furthermore, an upper current threshold Ihi is indicated by a line 21, and a lower current threshold flow is indicated by a line 20.

A curve 22 illustrates the ideal behavior of the current in this case. When the current reaches line 20 from higher currents, a supply stage like supply stage 11 or transistor 16 in Figs. 1A and 1B is switched on, and the current rises, and as soon as the current reaches line 21, the supply stage is switched off again, and the current falls.

This leads to an average current of (Ihi+Ilow)/2 between Ihi and Ilow as indicated by line 24 in Fig. 2.

Due to the loop delay of the control loop, the real behavior of the current differs from the ideal behavior. A curve 23 in Fig. 2 shows an example for such a real behavior. As the load current $I_{LED}$ reaching the upper threshold current Ihi is detected only with a certain delay (for example signal time from resistor 110 via threshold detection circuit 50 to signal processing and control part 111 in Fig. 1B) and then the supply stage is switched off with another delay (delay from signal and processing and control part 111 to drivers 112 and transistor 16, for example), the current actually continues to rise for a bit after reaching line 21, leading to overshoots. For similar reasons, it continues to fall for a bit after reaching line 20, leading to undershoots. In the example of Fig. 2, the overshoots are larger than the undershoots. In other cases, this may be different. In particular, the undershoots and overshoots depend on parameters including the duty cycle, inductance of inductor 18, input voltage Vin, output voltage Vout and the loop delay. Therefore, the curves in Fig. 2 are to be taken only as an illustrative example. The overshoots and undershoots lead to a shift of the average current, in this case to a higher value as indicated by a line 25 in Fig. 2.

In embodiments, an on-time $t_{on}$ and an off-time $t_{off}$ is measured. The on-time $t_{on}$ is the time between the current falling below Ilow and the current rising above Ihi, and the off-time $t_{off}$ is the time from the current rising above Ihi to falling below Ilow, as indicated in Fig. 2. While the crossings of Ihi and Ilow are detected with a certain delay as explained above, this delay is essentially the same for the crossing of Ihi and the crossing of Ilow. Therefore, the measurement of the on-time $t_{on}$ and the off-time $t_{off}$ is essentially not influenced by the loop delay of the control loop, as they correspond to the difference between two threshold crossings. Based on $t_{on}$ and $t_{off}$, in embodiments then the threshold values Ihi and Ilow are modified to compensate for the loop delay. Examples for this compensation will be explained further below.

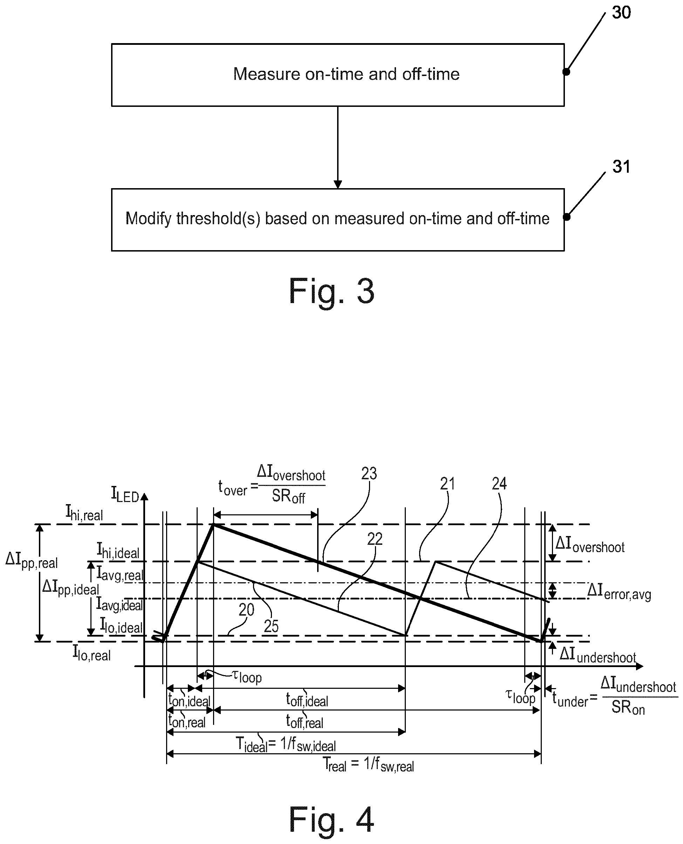

Before going into detail regarding the compensation of the threshold values, a method according to some embodiments will be described. Fig. 3 is a flow chart illustrating a method according to some embodiments. The method of Fig. 3 may be executed using the current mode switching regulator controllers and current mode switching regulators shown in Figs. 1A and 1B or as explained in more detail further below, but may also be used independently therefrom.

At 30, the method of Fig. 3 comprises measuring an on-time $t_{on}$ and an off-time $t_{off}$ of a current mode switching regulator, for example based on comparator outputs as explained with reference to Figs. 1B and 2.

At 31, the method comprises modifying thresholds (for example Ihi and flow of Fig. 2) based on the measured on-time and off-time. As will be explained further below, in addition to the on-time and off-time, the correction of thresholds may be based on further variables, for example inductance L of inductor 18 of Fig. 1B, input voltage $V_{in}$ in Fig. 1B, an estimation of the loop delay of the control loop or overshoot and undershoot times and slew rates, which may be measured. Examples for such approaches will now be discussed referring to Figs. 4 to 7.

Fig. 4 is a graph including example signals corresponding to curve 22 (ideal behavior) and 23 (example real behavior already discussed with reference to Fig. 2), where a plurality of quantities is illustrated which will be used in the following. $I_{hi,ideal}$ and $I_{low,ideal}$ are the threshold values according to lines 20 and 21, where for the ideal case the current according to curve 22 has its maximum and minimum, respectively. $I_{hi,real}$ and $I_{low,real}$ are the corresponding maximum and minimum values for the example real curve 23 including undershoots and overshoots. The difference between $I_{hi,ideal}$ and $I_{low,ideal}$, i.e. the current swing in the ideal case according to curve 22, is $\Delta I_{pp,ideal}$, and the corresponding value for curve 23 is $\Delta I_{pp,real}$.

For curve 22, the on- and off-times are denoted $t_{on,ideal}$ and $t_{off,ideal}$, and for curve 23 they are denoted $t_{on,real}$ and $t_{off,real}$. The loop delay of the control loop is denoted $\tau_{loop}$.

The sum of $t_{on}$ and $t_{off}$ is the switching period T, which is the inverse of the switching frequency $f_{sw}$. For curve 22, these are named $T_{ideal}$ and $f_{sw,ideal}$, respectively, and for curve 23 they are named $T_{real}$ and $f_{sw,real}$, respectively.

$\Delta I_{overshoot}$ is the difference between $I_{hi,real}$ and $I_{hi,ideal}$, and
$\Delta I_{undershoot}$ is the difference between $I_{lo,ideal}$ and $I_{lo,real}$.
$\Delta I_{error,avg}$ is the difference between the average current for curve 22 $I_{avg,ideal}$, which is $(I_{hi,ideal}+I_{lo,ideal})/2$, and $I_{avg,real}$, which is the average current for curve 23.

A time between curve 23 reaching $I_{hi,real}$ and then falling to $I_{hi,ideal}$ is named $t_{over}$, and a time between curve 23 reaching $I_{low,real}$, and then reaching $I_{lo,ideal}$ is named $t_{under}$. $t_{over}= \Delta I_{overshoot}/SR_{off}$, and $t_{under}= \Delta I_{undershoot}/SR_{on}$. $SR_{on}$ is the slew rate (i.e. slope) of the current when the supply stage is switched on, and $SR_{off}$ is the slew rate of the current when the supply stage is switched off.

It should be noted that the actual slew rates of curve 23 depend on the applied duty cycle, where steeper slew rates result in higher overshoots or undershoots, whereas flatter slew rates result in smaller overshoots and undershoots. For a 50 % duty cycle $\Delta I_{error,average}$ would be at or near 0, as in this case the undershoot and overshoot would be equal. The duty cycle will be denoted D in the following. As seen in Fig. 4, the loop delay $\tau_{loop}$ and the under- and overshoots associated with this also extend the period T and therefore reduce the switching frequency $f_{sw}$.

For the various quantities shown in Fig. 4, the following equations apply, where L is the inductance of an inductor of the supply stage, e.g. inductor 18 of Fig. 1B:

$$f_{SW,ideal} = \frac{D \cdot (V_{IN} - V_{OUT})}{L \cdot \Delta I_{pp,ideal}} \quad (1)$$

$$D = \frac{V_{OUT}}{V_{IN}} = \frac{t_{on,ideal}}{T_{ideal}} = \frac{t_{on,ideal}}{t_{on,ideal} + t_{off,ideal}} \quad (2)$$

$$t_{on,ideal} = \frac{D}{f_{SW}} \qquad (3)$$

$$SR_{on} = \frac{\Delta I_{pp,ideal}}{t_{on,ideal}} = \frac{(V_{IN}-V_{OUT})}{L} \qquad (4)$$

$$t_{off,ideal} = \frac{1-D}{f_{SW}} \qquad (5)$$

$$SR_{off} = \frac{\Delta I_{pp,ideal}}{t_{off,ideal}} = \frac{D}{1-D} \cdot \frac{(V_{IN}-V_{OUT})}{L} = \frac{V_{OUT}}{L} \qquad (6)$$

$$\Delta I_{overshoot} = \tau_{loop} \cdot SR_{on} \qquad (7)$$

$$\Delta I_{undershoot} = \tau_{loop} \cdot SR_{off} \qquad (8)$$

The resulting error in the average voltages $\Delta I_{error,avg}$ may then be calculated according to

$$\Delta I_{error,avg} = \Delta I_{avg,real} - \Delta I_{avg,ideal} \qquad = \frac{I_{hi,real}+I_{lo,real}}{2} - \frac{I_{hi,ideal}+I_{lo,ideal}}{2} \quad (9)$$

$$= \frac{1}{2} \cdot (\Delta I_{overshoot} - \Delta I_{undershoot}) = \frac{1}{2} \cdot \tau_{loop} \cdot \left(SR_{on} - SR_{off}\right) \qquad (10)$$

$$= \frac{1}{2} \cdot \tau_{loop} \cdot \frac{V_{in}-V_{out}}{L} \cdot \frac{1-2D}{1-D} \qquad = \frac{1}{2} \cdot \tau_{loop} \cdot \frac{V_{in}}{L} \cdot (1-2D) \qquad (11)$$

As can be seen, the error depends on duty cycle, input voltage, inductance L and the loop delay.
Inserting equation (2) into equation (11) to calculate the duty cycle based on $t_{on}$ and $t_{off}$ results in

$$\Delta I_{error,avg} = \frac{1}{2} \cdot \tau_{loop} \cdot \frac{V_{in}}{L} \cdot \left(1 - 2 \cdot \frac{t_{on}}{t_{on}+t_{off}}\right) = \frac{1}{2} \cdot \tau_{loop} \cdot \frac{V_{in}}{L} \cdot \frac{t_{off}-t_{on}}{t_{on}+t_{off}} \qquad (12)$$

Therefore, as can be seen, the error $\Delta I_{error,avg}$ may be calculated based on $t_{off}$ and $t_{on}$, as explained above.
Furthermore, in equation (12), the inductance L is known by design of the current mode switching regulator. The input voltage $V_{in}$ is either known for a specific setup or may be measured. For example, comparators may be provided comparing the input voltage $V_{in}$ with threshold values, such that a range in which the input voltage $V_{in}$ lies is determined. In other embodiments, more precise measurements of the input voltage $V_{in}$ may be performed, for example using an analog-to-digital converter. If the regulator is used for a specific input voltage, this may also be programmed into a controller like controller 10 or controller 15. The loop delay $\tau_{loop}$ may at least be approximated. For example, typical loop delays are between 80 ns and 120 ns. The loop delay may be also determined at least in part by circuit simulations. For example, the part of the loop delay caused by a controller (controller 10 or controller 15) may be determined by circuit simulations, and the remaining loop delay may be estimated based on the line length and components used.
Therefore, at least a good approximation of the values $V_{in}$, L, $\tau_{loop}$ may be provided and a corresponding estimate for $\Delta I_{error,avg}$ may be calculated. Based on this error, then the threshold values may be modified. According to the invention, this error value is added to or subtracted from the threshold values.
For digital processing, for example digital providing of the error values by signal processing and control part 111 of Fig. 1B to digital-to-analog converters 51, 53, the error values may also be calculated in terms of adjustable least significant bits (LSBs) of the threshold values. For this, the above value is multiplied with an LSB scaling factor, leading to equation (13) below:

$$\Delta I_{error,avg,LSB} = \frac{1}{2} \cdot \tau_{loop} \cdot \frac{V_{in}}{L} \cdot f_{scale,LSB} \cdot \frac{t_{off} - t_{on}}{t_{on} + t_{off}} = s_{comp,LSB} \cdot \frac{t_{off} - t_{on}}{t_{on} + t_{off}} \qquad (13)$$

The constant prefactor $s_{comp,LSB}$ is fixed for a certain setting (certain $V_{in}$, L, and $\tau_{loop}$ caused by circuit design), and the value $\Delta I_{error,avg,LSB}$ may be calculated based on $t_{on}$ and $t_{off}$. The multiplication with $s_{comp,LSB}$ may be implemented by some simple shift operations in some embodiments. Also, the calculation $(t_{off}-t_{on})/(t_{on}+t_{off})$ in usual applications is not time-critical, as the values in many applications do not vary rapidly. In some embodiments, also an averaging of one or more of $t_{on}$, $t_{off}$, $(t_{off}-t_{on})/(t_{on}+t_{off})$, or $\Delta I_{error,avg,LSB}$ may be applied, for example over a plurality of on-times and off-times.

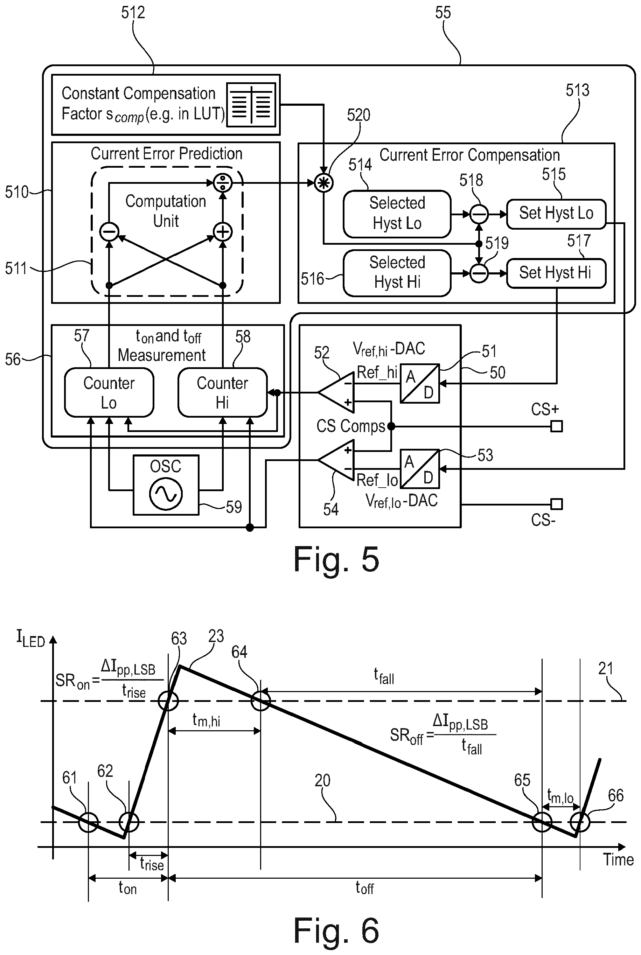

Fig. 5 illustrates a current mode switching regulator controller operating based on equation (13) above according to an embodiment and in particular the error calculation part thereof. Other parts, for example for driving a supply stage like supply stage 11 or the supply stage in Fig. 1B, may be implemented for example as shown in Fig. 1B with driver 112 or in any conventional manner.

The controller shown in Fig. 5 comprises the threshold detection part 50 which has already been described with Fig. 1B. Apart from using the output of comparators 52, 54 for switching on and off a supply stage, for example by switching transistor 16 of Fig. 1B, the outputs of comparators 52, 54 are also provided to a digital part 55 of the controller, specifically two counters 57, 58 of a measurement part 56.

It should be noted that describing digital parts with a plurality of blocks (like blocks 56, 510, 513 of Fig. 5) does not imply physically separate blocks, but may only indicate various functions that may be implemented using a digital part like a digital signal processor, ASIC, logic circuit or the like.

Counters 57, 58 are clocked by a clock signal provided by an oscillator 59. This may be a clock signal clocking digital part 55.

Counter 57 counts during $t_{on}$, i.e. start of counting is triggered by the voltage CS+ reaching the lower current threshold from above (as detected by comparator 54) and stopped when the voltage at CS+ reaches the upper current threshold from below, as detected by comparator 52. Conversely, counter 58 measures $t_{off}$ and is started when the voltage indicated by CS reaches the upper threshold from below (as indicated by comparator 52) and stopped when the voltage reaches the lower current threshold from above (as indicated by comparator 54). Therefore, the counting value of counter 57 is representative of $t_{on}$, and the counting value of counter 58 is representative of $t_{off}$.

It should be noted that to some extent the precision of this measurement of $t_{on}$ and $t_{off}$ also depends on the clock frequency of clock 59, as the times $t_{on}$, $t_{off}$ are measured in terms of clock cycles. Therefore, the clock frequency in embodiments is greater than the switching frequency for example at least ten times greater or at least 50 times greater, for example about a factor of 100 greater, to allow corresponding precise measurements of $t_{on}$ and $t_{off}$.

The values for $t_{on}$ and $t_{off}$ thus obtained are provided to a computation unit 511 of a current error prediction part 510. The calculations in current error prediction part 510 may be implemented in any suitable digital manner, and the representation of Fig. 5 is merely an example. As indicated by the "-", "+" and "÷" signs and the arrows there between, computation unit 511 calculates $(t_{off}-t_{on})/(t_{on}+_{off})$ used in equation (13). This value is then multiplied with the scaling factor $s_{comp,LSB}$ in a multiplier 520. $s_{comp,LSB}$ is provided from a storage 512. Storage 512 may for example comprise a look-up table where $s_{comp}$ is pre-calculated and stored for a plurality of values or value ranges for input voltage $V_{in}$, L and $\tau_{loop}$ and is selected accordingly. As mentioned above, these values $\tau_{loop}$, $V_{in}$, L are known by design, application scenario or may be measured. In embodiments where a certain controller is to be used for a certain setting (certain input voltage, certain inductance L) and this is known in advance, also only the single appropriate factor $s_{comp,LSB}$ for these particular settings may be programmed into storage 512, for example by using a voltage across a resistor coupled to a pin of the controller.

In a current error compensation part 513, values based on the correction value $\Delta I_{error,avg,LSB}$ output for multiplier 520 are subtracted or added by subtractors 518, 519 from or to a nominal lower current threshold stored in a storage 514 and a nominal upper current threshold stored in a storage 516, to result in corrected values stored in storages 515, 517, respectively. Whether a subtraction or addition may be used may depend on the sign convention and calculation of $\Delta I_{error,avg,LSB}$. If a positive $\Delta I_{error,avg,LSB}$ indicates that the average current is higher than the ideal average current and a negative $\Delta I_{error,avg,LSB}$ indicates that the average current is lower than the ideal average current, values may be subtracted (mathematically, such that subtraction of a negative value corresponds to an addition) from the nominal upper and lower thresholds to lower them for a positive $\Delta I_{error,avg,LSB}$. In the opposite case where a negative $\Delta I_{error,avg,LSB}$ indicates that the average current is higher than the ideal average current, values may be added to the nominal upper and lower thresholds. For example, the correction value $\Delta I_{error,avg,LSB}$ may be subtracted from or added to both the nominal upper and lower threshold current. Other ratios are also possible, for example such that in embodiments $rv \cdot \Delta I_{error,avg,LSB}$ may be subtracted from the nominal lower threshold current and $(2-rv) \cdot \Delta I_{error,avg,LSB}$ may be subtracted from the nominal upper threshold current, where rv is a value between 0 and 2. Other combinations changing the hysteresis and hence current ripple are also conceivable. For example, multiplicative correction factors for the nominal upper and lower threshold currents may be derived from $\Delta I_{error,avg,LSB}$.

Storages 514 to 517 may be registers, memory cells, or any other part within digital part 554 allowing the calculations explained. These corrected values are then fed to digital-to-analog converters 51, 53 to be used (in analog converted versions) as upper and lower current thresholds in comparators 52, 54. In this way, in some embodiments an effect of the loop delay, in particular on the average current, may be significantly reduced, depending on implementation.

As can be seen in Fig. 5, most of the calculations may be performed digital, and the threshold detection 50 is needed anyway for the control of the supply stage. Therefore, for implemented the current error compensation technique of Fig. 5, minimum additional hardware is necessary, and essentially only digital calculations in a controller have to be implemented accordingly.

To illustrate the effect of the discussed current error compensation, the following two tables show results with techniques as discussed above and without them for different inductor sizes and input voltages. Loop delay has been varied from 80ns to 120ns for each set of Vin and L. Table 1 shows the effect in terms of LSBs (assuming 10 bit resolution of 1.3 A max. current and a digital clock frequency of 55 MHz; duty cycle variations from 10% to 90%), while table 2 shows the situation for a relative error in percent for the same simulation settings.

Table 1:

| Inductor Size L in μH | Error of Average Current in LSBs Using Predictive Error Correction | | | | Error of Average Current in LSBs Without Any Correction (original) | | | |
|---|---|---|---|---|---|---|---|---|
| | $V_{in,lo}$ (≤ 40V) | $V_{in,mid}$ (40V-80V) | $V_{in,hi}$ (≥ 80V) | $V_{in,hi,2}$ (≥ 90V) | $V_{in,lo}$ (≤ 40V) | $V_{in,mid}$ (40V-80V) | $V_{in,hi}$ (≥ 80V) | $V_{in,hi,2}$ (≥ 90V) |
| 640-1000 | +/- 1,38 | +/- 2,55 | +/- 2,13 | +/- 2,76 | +/- 2,3 | +/- 4,55 | +/- 5,13 | +/- 5,76 |
| 470-640 | +/- 2,14 | +/- 2,58 | +/- 2,48 | +/- 2,49 | +/- 3,14 | +/- 6,2 | +/- 6,98 | +/- 7,84 |
| 400-470 | +/- 2,32 | +/- 2,92 | +/- 2,38 | +/- 2,43 | +/- 3,69 | +/- 7,28 | +/- 8,2 | +/- 9,22 |
| 370-400 | +/- 2,39 | +/- 2,87 | +/- 2,42 | +/- 2,47 | +/- 3,99 | +/- 7,87 | +/- 8,87 | +/- 9,96 |
| 350-370 | +/- 2,21 | +/- 3,34 | +/- 2,37 | +/- 2,86 | +/- 4,21 | +/- 8,32 | +/- 9,37 | +/- 10,53 |
| 310-350 | +/- 2,76 | +/- 3,39 | +/- 2,58 | +/- 2,89 | +/- 4,76 | +/- 9,39 | +/- 10,58 | +/- 11,89 |
| 280-310 | +/- 3,27 | +/- 3,81 | +/- 3,13 | +/- 3,17 | +/- 5,27 | +/- 10,4 | +/- 11,72 | +/- 13,17 |
| 230-280 | +/- 3,45 | +/- 4,66 | +/- 4,26 | +/- 4,13 | +/- 6,41 | +/- 12,66 | +/- 14,26 | +/- 16,03 |
| 200-230 | +/- 4,37 | +/- 5,54 | +/- 4,06 | +/- 4,95 | +/- 7,37 | +/- 14,56 | +/- 16,4 | +/- 18,43 |
| 180-200 | +/- 4,78 | +/- 5,83 | +/-4,4 | +/- 4,66 | +/- 8,19 | +/- 16,18 | +/- 18,23 | +/- 20,48 |
| 150-180 | +/- 5,83 | +/- 7,42 | +/- 5,87 | +/- 6,58 | +/- 9,83 | +/- 19,42 | +/- 21,87 | +/- 24,58 |
| 130-150 | +/- 6,34 | +/- 8,05 | +/- 6,24 | +/- 6,75 | +/- 11,34 | +/- 22,4 | +/- 25,24 | +/- 28,36 |
| 110-130 | +/- 7,41 | +/- 9,94 | +/- 7,83 | +/- 8,31 | +/- 13,41 | +/- 26,48 | +/- 29,83 | +/- 33,51 |
| 90-110 | +/- 9,38 | +/- 11,4 | +/- 9,45 | +/- 10,93 | +/- 16,38 | +/- 32,36 | +/- 36,45 | +/- 40,96 |

Table 2:

| Inductor Size L in μH | Error of Average Current in % (for $I_{LED}$=250mA) Using Predictive Error Correction | | | | Error of Average Current in % (for $I_{LED}$=250mA) Without Any Correction (original) | | | |
|---|---|---|---|---|---|---|---|---|
| | $V_{in,lo}$ (≤ 40V) | $V_{in,mid}$ (40V-80V) | $V_{in,hi}$ (≥ 80V) | $V_{in,hi,2}$ (≥ 90V) | $V_{in,lo}$ (≤ 40V) | $V_{in,mid}$ (40V-80V) | $V_{in,hi}$ (≥ 80V) | $V_{in,hi,2}$ (≥ 90V) |
| 640-1000 | +/- 0,72 | +/- 1,33 | +/- 1,11 | +/- 1,44 | +/-1,2 | +/- 2,37 | +/- 2,67 | +/- 3 |
| 470-640 | +/- 1,11 | +/- 1,34 | +/- 1,29 | +/- 1,3 | +/- 1,63 | +/- 3,23 | +/- 3,64 | +/- 4,09 |
| 400-470 | +/- 1,21 | +/- 1,52 | +/- 1,24 | +/- 1,27 | +/- 1,92 | +/- 3,79 | +/- 4,27 | +/- 4,8 |
| 370-400 | +/- 1,24 | +/- 1,5 | +/- 1,26 | +/- 1,29 | +/- 2,08 | +/- 4,1 | +/- 4,62 | +/- 5,19 |
| 350-370 | +/- 1,15 | +/- 1,74 | +/- 1,24 | +/- 1,49 | +/- 2,19 | +/- 4,33 | +/- 4,88 | +/- 5,49 |

(continued)

| Inductor Size L in μH | Error of Average Current in % (for $I_{LED}$=250mA) Using Predictive Error Correction | | | | Error of Average Current in % (for $I_{LED}$=250mA) Without Any Correction (original) | | | |
|---|---|---|---|---|---|---|---|---|
| | $V_{in,lo}$ (≤ 40V) | $V_{in,mid}$ (40V-80V) | $V_{in,hi}$ (≥ 80V) | $V_{in,hi,2}$ (≥ 90V) | $V_{in,lo}$ (≤ 40V) | $V_{in,mid}$ (40V-80V) | $V_{in,hi}$ (≥ 80V) | $V_{in,hi,2}$ (≥ 90V) |
| 310-350 | +/- 1,44 | +/- 1,77 | +/- 1,35 | +/- 1,51 | +/- 2,48 | +/- 4,89 | +/- 5,51 | +/- 6,19 |
| 280-310 | +/- 1,7 | +/- 1,98 | +/- 1,63 | +/- 1,65 | +/- 2,74 | +/- 5,42 | +/- 6,1 | +/- 6,86 |
| 230-280 | +/- 1,8 | +/- 2,43 | +/- 2,22 | +/- 2,15 | +/- 3,34 | +/- 6,59 | +/- 7,43 | +/- 8,35 |
| 200-230 | +/- 2,28 | +/- 2,89 | +/- 2,12 | +/- 2,58 | +/- 3,84 | +/- 7,58 | +/- 8,54 | +/- 9,6 |
| 180-200 | +/- 2,49 | +/- 3,04 | +/- 2,29 | +/- 2,43 | +/- 4,27 | +/- 8,43 | +/- 9,49 | +/- 10,67 |
| 150-180 | +/- 3,04 | +/- 3,86 | +/- 3,06 | +/- 3,43 | +/- 5,12 | +/- 10,11 | +/- 11,39 | +/- 12,8 |
| 130-150 | +/- 3,3 | +/- 4,19 | +/- 3,25 | +/- 3,51 | +/- 5,91 | +/- 11,67 | +/- 13,14 | +/- 14,77 |
| 110-130 | +/- 3,86 | +/- 5,18 | +/- 4,08 | +/- 4,33 | +/- 6,98 | +/- 13,79 | +/- 15,53 | +/- 17,45 |
| 90-110 | +/- 4,89 | +/- 5,94 | +/- 4,92 | +/- 5,7 | +/- 8,53 | +/- 16,85 | +/- 18,99 | +/- 21,33 |

The table 1 gives the average current error in least significant bits. As can be seen, the current error may be reduced significantly, for example may be approximately halved in many cases down to low single digit LSBs.

It should be noted that the current error generally also depends on the duty cycle, where it is generally close to 0 at a duty cycle of 0.5 and increases for higher duty cycles. A reduction of the current error was observed over a wide range of duty cycles.

In the above embodiment, estimations or measurements of $V_{in}$, L and $\tau_{loop}$.were necessary. Next, further embodiments will be discussed where additional time measurements are used to determine or estimate of $V_{in}/L$ and $\tau_{loop}$.

The measurement of additional times is illustrated in Fig. 6. Fig. 6 shows the already discussed curve 23 representing an example for a real current behavior, together with line 20 representing the lower current threshold and line 21 representing the upper current threshold.

As can be seen, in each period T as defined with respect to Fig. 4, both the lower current threshold as represented by line 20 are crossed twice (at 61, 62, and then 65, 66 in a next period T) and the upper current threshold as represented by line 21 is also crossed twice (at 63 and 64). Each crossing of the lower current threshold and the upper current threshold may be detected for example with the respective comparator (for example comparators 52, 54 of Fig. 1B) by a state change of the respective output. Therefore, additional times may be measured by monitoring the change of the comparator outputs.

These times are a rise time $t_{rise}$, from the current crossing the lower current threshold from below (for example at 62) to the current reaching the upper current threshold (for example at 63), an overshoot time $t_{m,hi}$, between the crossings of the upper current threshold in a period (for example between 63 and 64 of Fig. 6), a fall time $t_{fall}$, between the current crossing the upper current threshold from above (for example at 64) and the current crossing the lower current threshold from above (for example at 65 in Fig. 6), and an undershoot time $t_{m,low}$, between the crossings of the lower current threshold delimiting an undershoot (for example between 61 and 62 in Fig. 6 or between 65 and 66 in Fig. 6). As also indicated in Fig. 6, the slew rate $SR_{on}$ may be expressed by $\Delta I_{pp}$ (for example expressed in terms of least significant bits) and $t_{rise}$, and slew rate $SR_{off}$ may be expressed using $\Delta I_{PP}$ and $t_{fall}$. This will be explained in more detail below.

Reverting to equation (12) the three contributors to the actual error may be seen as 1. $(t_{off}-t_{on})$ / $(t_{on}+t_{off})$, 2. $V_{in}/L$, and 3. $\tau_{loop}$. As already explained above, $(t_{off}-t_{on})$ / $(t_{on}+t_{off})$ may be measured, for example as explained with reference to Fig. 5. With the additional measurements illustrated in Fig. 6, also the other two contributions (2. and 3.) may be determined, as shown in the following.

The contribution of $V_{in}/L$, as to some extent already indicated in Fig. 6, may be determined based on the slew rate $SR_{on}$ and $SR_{off}$ for the rising and falling portions of the load current, respectively, and the difference of the selected (i.e. ideal) threshold levels, named $\Delta I_{pp,LSB}$ (corresponding to $\Delta I_{pp,ideal}$ of Fig. 4) . Using equations (4) and (6) results in

$$\frac{V_{IN}}{L} = SR_{on} + \frac{V_{OUT}}{L} = SR_{on} + SR_{off} = \Delta I_{pp,LSB} \cdot \left( \frac{1}{t_{rise}} + \frac{1}{t_{fall}} \right) \qquad (14)$$

As $\Delta I_{pp,LSB}$ is known as difference between the threshold voltage levels set by the controller, $V_{in}/L$ may therefore be calculated by measuring $t_{rise}$ and $t_{fall}$.

The contribution of $\tau_{loop}$ may be calculated by measuring $t_{m,hi}$ and/or $t_{m,low}$, i.e. the times where the current is above the upper threshold value or below the lower threshold value. Using equations (7) and (8) as well as the relationships shown in Figs. 4 and 6, $\tau_{loop}$ may be calculated as follows.

$$\tau_{loop} = t_{m,hi} - t_{over} = t_{m,hi} - \frac{\Delta I_{overshoot}}{SR_{off}} = t_{m,hi} - \frac{SR_{on}}{SR_{off}} \cdot \tau_{loop} \qquad (15)$$

$$\Rightarrow \tau_{loop} = t_{m,hi} \cdot \frac{SR_{off}}{SR_{off}+SR_{on}} \qquad (16)$$

$$\Rightarrow \tau_{loop} = t_{m,lo} \cdot \frac{SR_{on}}{SR_{off}+SR_{on}} \qquad (17)$$

$SR_{on}$ and $SR_{off}$ as explained above may also be determined based on $t_{fall}$ and $t_{rise}$ (see Fig. 6). Therefore, $\tau_{loop}$ may be measured using $t_{m,lo}$ or $t_{m,hi}$.

As seen from equation (16) and (17), $\tau_{loop}$ may be calculated both by measuring $t_{m,hi}$ and $t_{m,lo}$. Depending on the duty cycle, one of these times may be very short (for example, in Fig. 6 $t_{m,lo}$ is much shorter than $t_{m,hi}$). When such times are measured using a digital clock (similar to the measurement using counters and oscillator 59 in Fig. 9), such a short time may be only very few clock cycles of this clock if it becomes short, which may lead to a comparatively large measurement error (as in such measurements the clock cycle is the shortest unit). To increase robustness, in some embodiments both $t_{m,hi}$ and $t_{m,lo}$ are measured, and an average may be made according to the below equation (18).

$$\tau_{loop} = \frac{1}{2} \cdot \left( t_{m,hi} \cdot \frac{SR_{off}}{SR_{off}+SR_{on}} + t_{m,lo} \cdot \frac{SR_{on}}{SR_{off}+SR_{on}} \right) \qquad (18)$$

In other embodiments, both $t_{m,hi}$ and $t_{m,lo}$ may be measured and compared for each other, and for calculating $\tau_{loop}$ only the larger of the two times may be used, i.e. either equation (16) or equation (17) is used. In still other embodiments, only $t_{m,hi}$ or only $t_{m,lo}$ may be used.

The resulting error $\Delta I_{error,avg}$ using equations (12), (14) and (18) may be calculated according to

$$\begin{aligned}
\Delta I_{error,avg} &= \frac{1}{2} \cdot \tau_{loop} \cdot \frac{V_{in}}{L} \cdot \frac{t_{off}-t_{on}}{t_{on}+t_{off}} \\
&= \frac{1}{2} \cdot \frac{1}{2} \cdot \left( t_{m,hi} \cdot \frac{SR_{off}}{SR_{off}+SR_{on}} + t_{m,lo} \cdot \frac{SR_{on}}{SR_{off}+SR_{on}} \right) \cdot \left( SR_{on} + SR_{off} \right) \cdot \frac{t_{off}-t_{on}}{t_{on}+t_{off}} \\
&= \frac{1}{4} \cdot \left( t_{m,hi} \cdot SR_{off} + t_{m,lo} \cdot SR_{on} \right) \cdot \frac{t_{off}-t_{on}}{t_{on}+t_{off}} \\
&= \frac{1}{4} \cdot \Delta I_{pp,LSB} \cdot \left( \frac{t_{m,hi}}{t_{fall}} + \frac{t_{m,lo}}{t_{rise}} \right) \cdot \frac{t_{off}-t_{on}}{t_{on}+t_{off}} \qquad (19)
\end{aligned}$$

Consequently, by measuring the times shown in Fig. 6, namely $t_{on}$, $t_{off}$, $t_{rise}$, $t_{fall}$, $t_{m,hi}$, and $t_{m,lo}$, it is possible to calculate $\Delta I_{error,avg}$ without needing to make assumptions about or measurements of the input voltage $V_{in}$, the inductance L of an inductor used or the loop delay $\tau_{loop}$. It should be noted that when using equation (19), the loop delay does not have to be determined beforehand or separately, but $\Delta I_{error,avg}$ may be calculated directly based on measured times. It should also be noted that in yet other embodiments, $V_{IN}/L$ may be determined based on equation (14), but $\tau_{loop}$ may be estimated as in the embodiment of Fig. 5, or may be calculated separately as in equation (16), (17) or (18).

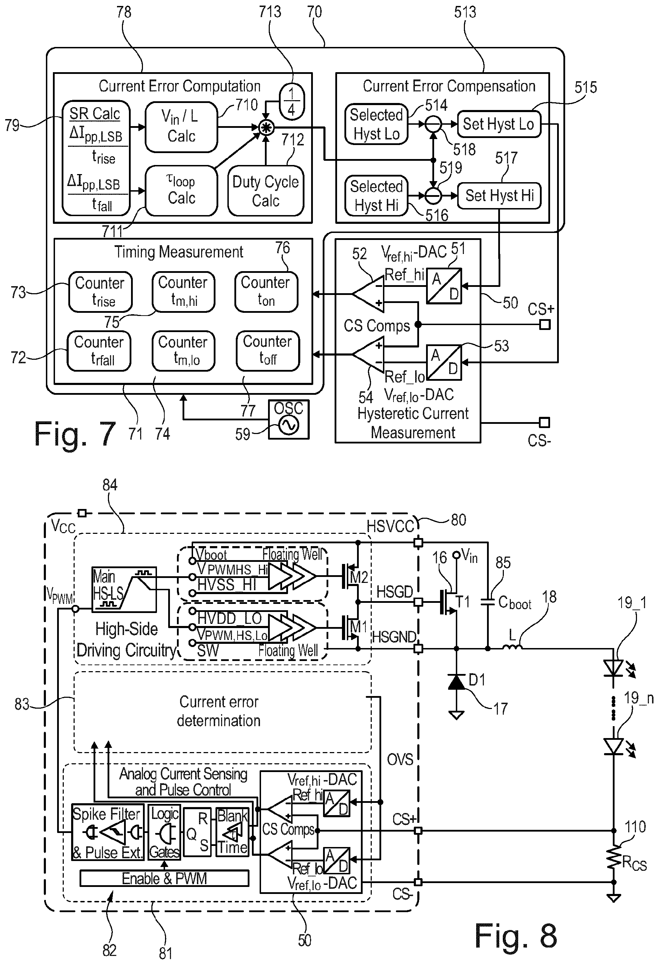

Fig. 7 illustrates a part of a controller implementing such an approach.

The controller of Fig. 7 comprises the already discussed threshold detection circuit 50, oscillator 59 and a digital part 70.

Output of comparators 52, 54 are provided to a timing measurement part 71. Timing measurement part 71 in the embodiment of Fig. 7 comprises six counters clocked by a clock supplied by oscillator 59. Each counter measures one of the times explained above with reference to Figs. 4 and 6, by starting and stopping to count at the respective state changes of the output signals of comparators 52, 54, which correspond to the current crossing the upper or lower threshold value. A counter 72 measures $t_{fall}$, a counter 73 measures $t_{rise}$, a counter 74 measures $t_{m,lo}$, a counter 75 measures $t_{m,hi}$, a counter 76 measures $t_{on}$ and a counter 77 measures $t_{off}$. It should be noted that the number of counters may vary depending on implementation. For example, while separate counters are shown in Fig. 7 for each time to be measured, different times may also be measured by a single counter sequentially.

The thus determined values are provided to a current error computation part 78, which determines a correction value according to equation (19). This calculation is symbolized by elements 79, 710 to 713 in Fig. 7. These elements merely symbolize the calculation, and the calculation may be implemented in any manner. In particular, these elements represent the calculation of the various factors of equation (19). At 79, the slew rates $\Delta I_{pp,LSB}/t_{rise}$ and $\Delta I_{pp,LSB}/t_{fall}$ are calculated, which are then used to calculate $V_{in}/L$ at 710 and $\tau_{loop}$ at 711. At 712, the duty cycle value (1-2D) is calculated according to $(t_{off}-t_{on}) / (t_{on}+t_{off})$. All these elements are multiplied by 1/4 (713) to result in $\Delta I_{error,avg}$.

A compensation part 513 essentially corresponds to the compensation part 513 of Fig. 5, where now the values based on $\Delta I_{error,avg}$ calculated in part 78 are subtracted at subtractors 518, 519.

In some implementations, depending on how precise the loop delay, inductor and input voltage may be determined in the embodiment of Fig. 5, with the embodiment of Fig. 7 the current error may be further reduced, in some cases by a further factor of 2. In other cases, the approach of the embodiment of Fig. 5 may be more precise, for example when the loop delay, the inductance of the inductor and the input voltage is known precisely. Also, the clock frequency used for timing measurement has an impact of the precision of the measurements of the various times and hence on the precision, and for the embodiment of Fig. 5 clock requirements may be more relaxed.

Fig. 8 illustrates a current mode switching regulator according to an embodiment, which may use a controller using a compensation for loop delay as discussed with reference to Fig. 5 or Fig. 7. While Fig. 8 shows a specific implementation, this serves only as illustrative example, and as already mentioned techniques disclosed herein may be used in conjunction with various topologies.

In Fig. 8, a controller 80 is provided to control a supply stage including transistor 16, diode 17 and inductor 18 which have already been discussed referring to Fig. 1B. Additionally, a bootstrap capacitor 85 is provided in the implementation example of Fig. 8. Similar to Fig. 1B, in the embodiment of Fig. 8 a chain of light-emitting diodes 19 is supplied with current. The current through the diodes is measured using the already discussed shunt resistor 110.

The measured current is provided to controller 80 at terminals CS+, CS- and are compared with an upper current threshold and a lower current threshold using the already discussed threshold detection circuit 50. Outputs of the comparators (52 and 54) of threshold detection circuit 50 are provided to a digital current error determination and compensation part 83, which may be implemented corresponding to parts 56, 510, 512 and 513 of Fig. 5 or implemented corresponding to parts 71, 78 and 513 of Fig. 7 to set the threshold values for threshold detection circuit 50.

Furthermore, the outputs of the comparators of threshold detection circuit 50 are provided to an analog pulse control part 82 of an analog part 81, which may for example comprise logic gates, flip-flops, latches, filters and other elements to provide a pulse with modulated voltage $V_{PWM}$, which is then used to drive transistor 16 through driving circuitry 84. Driving circuitry 84 in the example of Fig. 8 uses a low-side transistor M1 and a high-side transistor M2 driven by respective drivers to output a signal to the gate of transistor 16 at a terminal HSGD. Any conventional driving circuitry 84 and pulse control circuitry 82 may be used, and the implementation shown is merely an example.

It should be noted that while a certain topology for supply stage and kind of the supply stage based on the threshold crossings is shown in Fig. 8, the approaches discussed herein may generally be used in circuits like switched mode power supply where an output current is regulated based on an upper threshold and a lower threshold.

Moreover, techniques discussed herein are not applicable to current control only, but are generally applicable to cases where an output quantity is regulated based on upper and lower thresholds. Examples include voltage regulations or temperature regulations. For example, in case of a voltage regulation, a voltage divider like a resistive divider may be coupled in parallel to a load to provide a feedback signal indicative of a voltage across the load, which may then be compared to upper and lower voltage thresholds.

**Claims**

1. A controller (10; 15; 80), comprising:

a threshold detection circuit (13; 50) configured to receive a feedback signal (fb) indicative of a load current ($I_{LED}$), and to detect when the load current ($I_{LED}$) as indicated by the feedback signal (fb) reaches an upper current threshold or a lower current threshold,
a control circuit (112; 84) configured to control a supply stage (11; 16, 17, 18) in response to the detecting, in order to supply a load with the load current ($I_{LED}$), and
a current error determination and compensation circuit (83) configured to determine an on-time ($t_{on}$) between a first point in time (61), where the load current ($I_{LED}$) reaches the lower threshold current from above, and a second point in time (63), where the load current ($I_{LED}$) reaches the upper current threshold from below, and an off-time ($t_{off}$) between the second point in time (63) and a following first point in time (65), and to adjust the upper current threshold and the lower current threshold based on the on-time ($t_{on}$) and the off-time ($t_{off}$), a storage (512),

**characterized in that**

the current error determination and compensation circuit (83) is configured to determine a deviation of the load current from a nominal average load current based on the on-time, the off-time and a factor depending on an input voltage ($V_{in}$), an inductance (L) of an inductor (18) of the supply stage and a control loop delay ($\tau_{loop}$), wherein either the current determination and compensation circuit is configured to know the input voltage ($V_{in}$), the inductance (L) and the control loop delay ($\tau_{loop}$) by design, by application scenario or measurement, and the storage (512) comprises a look-up table comprising factor values, or

the factor is programmed in the storage (512), wherein the current error determination and compensation circuit is configured to modify the upper current threshold and/or the lower current threshold adding or subtracting values, which values are based on the deviation of the load current from the nominal average load current, to or from the upper current threshold and/or the lower current threshold.

2. The controller of claim 1, wherein the current error determination and compensation circuit (83) is configured to determine a value indicative of a duty cycle of the supply stage (11; 16, 17, 18) based on the on-time and the off-time.

3. The controller of claim 1 or 2, wherein the current error determination and compensation circuit (83) is implemented digitally.

4. The controller of any one of claims 1 to 3, wherein the current error determination and compensation circuit (83) comprises at least one counter (57, 58; 76, 77) to determine the on-time and the off-time.

5. The controller of any one of claims 1 to 4, wherein the current error determination and compensation circuit is configured to determine the deviation of the load current from the nominal average load current, in digital values, according to

$$\Delta I_{error,avg,LSB} = s_{comp,LSB} \cdot \frac{t_{off} - t_{on}}{t_{on} + t_{off}} ,$$

wherein $\Delta I_{error,avg,LSB}$ is the deviation of the load current from a nominal average load current in terms of a least significant bit of a target average current and $s_{comp,LSB}$ is the factor.

6. The controller of any one of claims 1 to 4, wherein the current error determination and compensation circuit (83) is configured to determine a fall time ($t_{fall}$) between a third point in time (64) where the load current ($I_{LED}$) crosses the upper threshold current from above and a following first point in time (65), a rise time ($t_{rise}$) from a fourth point in time (62; 66) where the load current ($I_{LED}$) crosses the lower current threshold from below to a following second point in time (63), and further configured to determine the factor further based on the rise time ($t_{rise}$) and the fall time ($t_{fall}$).

7. The controller of claim 6, wherein the current error determination and compensation circuit (83) is configured to determine at least one of a overshoot time ($t_{m,hi}$) between a second point in time (63) and a following third point in time (64) or an undershoot time ($t_{m,lo}$) between a first point in time (61; 65) and a following fourth point in time (62; 66), and further configured to determine the factor based on the at least one of the overshoot time ($t_{m,hi}$) and the undershoot time ($t_{m,lo}$).

8. The controller of claim 7, wherein the controller is configured to determine the factor further based on both the overshoot time and the undershoot time.

9. The controller of claim 7 or 8, wherein the controller is configured to determine the deviation of the load current from a nominal average load current according to

$$\Delta I_{error,avg} = \frac{1}{4} \cdot \Delta I_{pp,LSB} \cdot \left( \frac{t_{m,hi}}{t_{fall}} + \frac{t_{m,lo}}{t_{rise}} \right) \cdot \frac{t_{off} - t_{on}}{t_{on} + t_{off}} ,$$

wherein $\Delta I_{error,avg}$ is the deviation of the load current from a nominal average load current, $\Delta I_{pp,LSB}$ is a difference between the upper current threshold and the lower current threshold, $t_{m,hi}$ is the overshoot time, $t_{m,lo}$ is the undershoot time, $t_{fall}$ is the fall time, $t_{rise}$ is the rise time, $t_{on}$ is the on-time and $t_{off}$ is the off-time.

10. A current mode switching regulator, comprising the controller of any one of claims 1 to 9 and the supply stage, wherein the supply stage comprises at least one transistor (16), and the inductor (18) coupled to the transistor.

11. A method, comprising:

receiving a feedback signal (fb) indicative of a load current ($I_{LED}$) ,
detecting when the load current ($I_{LED}$) as indicated by the feedback signal (fb) reaches an upper current threshold or a lower current threshold,
controlling a supply stage (11; 16, 17, 18) in response to the detecting, in order to supply a load with the load current ($I_{LED}$) ,
determining an on-time ($t_{on}$) between a first point in time (61), where the load current ($I_{LED}$) reaches the lower threshold current from above, and a second point in time (63), where the load current ($I_{LED}$) reaches the upper current threshold from below, and an off-time ($t_{off}$) between the second point in time (63) and a following first point in time (65), and
adjusting the upper current threshold and the lower current threshold based on the on-time ($t_{on}$) and the off-time ($t_{off}$),
**characterized by**
further comprising determining a deviation of the load current from a nominal average load current based on the on-time, the off-time and a factor depending on an input voltage ($V_{in}$), an inductance (L) of an inductor (18) of the supply stage and a control loop delay ($\tau_{loop}$), wherein the input voltage ($V_{in}$), the inductance (L) and the control loop delay ($\tau_{loop}$) are known by design, by application scenario or are
measured and a storage (512) comprises a look-up table comprising factor values, or the factor is programmed in the storage(512), and
modifying the upper current threshold and/ or the lower current threshold adding or subtracting values, which values are based on the deviation of the load current from the nominal average load current, to or from the upper current threshold and/or the lower current threshold.

12. The method of claim 11, further comprising determining a value indicative of a duty cycle of the supply stage (11; 16, 17, 18) based on the on-time and the off-time.

13. The method of claim 11 or 12, further comprising

determining a fall time ($t_{fall}$) between a third point in time (65) where the load current ($I_{LED}$) crosses the upper threshold current from above and a following first point in time (65), a rise time ($t_{rise}$) from a fourth point in time (62; 66) where the load current ($I_{LED}$) crosses the lower current threshold from below to a following second point in time (63), and
determining the factor further based on the rise time ($t_{rise}$) and the fall time ($t_{fall}$).

14. The method of claim 13, further comprising determining at least one of a overshoot time ($t_{m,hi}$) between a second point in time (63) and a following third point in time (64) and an undershoot time ($t_{m,lo}$) between a first point in time (65) and a following fourth point in time (62; 66), and
determining the factor further based on the at least one of the overshoot time ($t_{m,hi}$) and the undershoot time ($t_{m,lo}$) .

**Patentansprüche**

1. Steuergerät (10; 15; 80), das Folgendes umfasst:

eine Schwellenwerterkennungsschaltung (13; 50), die so ausgebildet ist, dass sie ein Rückkopplungssignal (fb) empfängt, das einen Laststrom ($I_{LED}$) anzeigt, und dass sie erfasst, wenn der Laststrom ($I_{LED}$), wie er durch das Rückkopplungssignal (fb) angezeigt wird, einen oberen Stromschwellenwert oder einen unteren Stromschwellenwert erreicht,
eine Steuerschaltung (112; 84), die so ausgebildet ist, dass sie eine Versorgungsstufe (11; 16, 17, 18) in Reaktion auf die Erkennung steuert, um eine Last mit dem Laststrom ($I_{LED}$) zu versorgen, und
eine Stromfehlerbestimmungs- und-kompensationsschaltung (83), die so ausgebildet ist, dass sie eine Ein-schaltzeit ($t_{on}$) zwischen einem ersten Zeitpunkt (61), an dem der Laststrom ($I_{LED}$) den unteren Schwellenstrom von oben erreicht, und einem zweiten Zeitpunkt (63), an dem der Laststrom (I$_{LED}$) den oberen Stromschwellenwert von unten erreicht, und eine Ausschaltzeit (t$_{off}$) zwischen dem zweiten Zeitpunkt (63) und einem folgenden ersten Zeitpunkt (65) bestimmt und den oberen Stromschwellenwert und den unteren Stromschwellenwert auf der Grundlage der Einschaltzeit (t$_{on}$) und der Ausschaltzeit (t$_{off}$) einstellt,

einen Speicher (512), **dadurch gekennzeichnet, dass** die Stromfehlerbestimmungs- und -kompensationsschaltung (83) so ausgebildet ist, dass sie eine Abweichung des Laststroms von einem nominalen durchschnittlichen Laststrom auf der Grundlage der Einschaltzeit, der Ausschaltzeit und eines Faktors bestimmt, der von einer Eingangsspannung (V$_{in}$), einer Induktivität (L) eines Induktors (18) der Versorgungsstufe und einer Regelkreisverzögerung ($\tau_{loop}$) abhängig ist,

wobei entweder die Stromfehlerbestimmungs- und -kompensationsschaltung so ausgebildet ist, dass sie die Eingangsspannung (V$_{in}$), die Induktivität (L) und die Regelkreisverzögerung ($\tau_{loop}$) durch Design, durch Anwendungsszenario oder Messung zu kennen, und der Speicher (512) eine Nachschlagetabelle mit Faktorwerten umfasst, oder der Faktor im Speicher (512) programmiert ist,

wobei die Stromfehlerbestimmungs- und-kompensationsschaltung so ausgebildet ist, dass sie den oberen Stromschwellenwert und/oder den unteren Stromschwellenwert modifiziert, indem sie Werte, die auf der Abweichung des Laststroms von dem durchschnittlichen Nennlaststrom basieren, zu dem oberen Stromschwellenwert und/oder dem unteren Stromschwellenwert addiert oder davon subtrahiert.

2. Steuergerät nach Anspruch 1,
wobei die Stromfehlerbestimmungs- und-kompensationsschaltung (83) so ausgebildet ist, dass sie auf der Grundlage der Einschaltzeit und der Ausschaltzeit einen Wert bestimmt, der ein Tastverhältnis der Versorgungsstufe (11; 16, 17, 18) angibt.

3. Steuergerät nach Anspruch 1 oder 2,
wobei die Stromfehlerbestimmungs- und - kompensationsschaltung (83) digital implementiert ist.

4. Steuergerät nach einem der Ansprüche 1 bis 3,
wobei die Stromfehlerbestimmungs- und - kompensationsschaltung (83) mindestens einen Zähler (57, 58; 76, 77) zur Bestimmung der Einschaltzeit und der Ausschaltzeit umfasst.

5. Steuergerät nach einem der Ansprüche 1 bis 4,
wobei die Stromfehlerbestimmungs- und-kompensationsschaltung so ausgebildet ist, dass sie die Abweichung des Laststroms von dem durchschnittlichen Nennlaststrom in digitalen Werten bestimmt, gemäß

$$\Delta I_{error,avg,LSB} = s_{comp,LSB} \cdot \frac{t_{off} - t_{on}}{t_{on} + t_{off}},$$

wobei $\Delta I_{error,avg,LSB}$ die Abweichung des Laststroms von einem durchschnittlichen Nennlaststrom in Bezug auf ein niederwertiges Bit eines durchschnittlichen Zielstroms ist und $s_{comp,LSB}$ der Faktor ist.

6. Steuergerät nach einem der Ansprüche 1 bis 4,
wobei die Stromfehlerbestimmungs- und-kompensationsschaltung (83) so ausgebildet ist, dass sie eine Abfallzeit (t$_{fall}$) zwischen einem dritten Zeitpunkt (64), an dem der Laststrom (I$_{LED}$) den oberen Stromschwellenwert von oben überschreitet, und einem folgenden ersten Zeitpunkt (65) bestimmt, eine Anstiegszeit (t$_{rise}$) von einem vierten Zeitpunkt (62; 66), wo der Laststrom (I$_{LED}$) den unteren Stromschwellenwert von unten zu einem folgenden zweiten Zeitpunkt (63) kreuzt, und ferner ausgebildet, um den Faktor weiterhin auf der Grundlage der Anstiegszeit (t$_{rise}$) und der Abfallzeit (t$_{fall}$) zu bestimmen.

7. Steuergerät nach Anspruch 6,
wobei die Stromfehlerbestimmungs- und-kompensationsschaltung (83) so ausgebildet ist, dass sie mindestens eine von einer Überschwingzeit (t$_{m,hi}$) zwischen einem zweiten Zeitpunkt (63) und einem folgenden dritten Zeitpunkt (64) oder einer Unterschwingzeit (t$_{m,lo}$) zwischen einem ersten Zeitpunkt (61; 65) und einem folgenden vierten Zeitpunkt (62; 66) bestimmt, und ferner so ausgebildet ist, dass sie den Faktor auf der Grundlage der Überschwingzeit (t$_{m,hi}$) und/oder der Unterschwingzeit (t$_{m,lo}$) bestimmt.

8. Steuergerät nach Anspruch 7,
wobei das Steuergerät so ausgebildet ist, dass es den Faktor außerdem auf der Grundlage sowohl der Überschwingzeit als auch der Unterschwingzeit bestimmt.

9. Steuergerät nach Anspruch 7 oder 8,

wobei das Steuergerät so ausgebildet ist, dass es die Abweichung des Laststroms von einem durchschnittlichen Nennlaststrom bestimmt, gemäß

$$\Delta I_{error,avg} = \frac{1}{4} \cdot \Delta I_{pp,LSB} \cdot \left( \frac{t_{m,hi}}{t_{fall}} + \frac{t_{m,lo}}{t_{rise}} \right) \cdot \frac{t_{off}-t_{on}}{t_{on}+t_{off}},$$

wobei $\Delta I_{error,avg}$ die Abweichung des Laststroms von einem mittleren Nennlaststrom ist, $\Delta I_{pp,LSB}$ eine Differenz zwischen dem oberen Stromschwellenwert und dem unteren Stromschwellenwert ist, $t_{m,hi}$ die Überschwingzeit ist, $t_{m,lo}$ die Unterschwingzeit ist, $t_{fall}$ die Abfallzeit ist, $t_{rise}$ die Anstiegszeit ist, $t_{on}$ die Einschaltzeit ist und $t_{off}$ die Ausschaltzeit ist.

10. Strommodus-Umschaltregler, der das Steuergerät nach einem der Ansprüche 1 bis 9 und die Versorgungsstufe umfasst,
wobei die Versorgungsstufe mindestens einen Transistor (16) umfasst und der Induktor (18) mit dem Transistor gekoppelt ist.

11. Verfahren, das Folgendes umfasst:

Empfangen eines Rückkopplungssignals (fb), das einen Laststrom ($I_{LED}$) anzeigt,
Erkennen, wenn der Laststrom ($I_{LED}$), der durch das Rückkopplungssignal (fb) angezeigt wird, einen oberen oder unteren Stromschwellenwert erreicht,
Steuern einer Versorgungsstufe (11; 16, 17, 18) in Reaktion auf die Erkennung, um eine Last mit dem Laststrom ($I_{LED}$) zu versorgen,
Bestimmen einer Einschaltzeit ($t_{on}$) zwischen einem ersten Zeitpunkt (61), an dem der Laststrom ($I_{LED}$) den unteren Schwellenstrom von oben erreicht, und einem zweiten Zeitpunkt (63), an dem der Laststrom ($I_{LED}$) den oberen Stromschwellenwert von unten erreicht, und einer Ausschaltzeit ($t_{off}$) zwischen dem zweiten Zeitpunkt (63) und einem folgenden ersten Zeitpunkt (65), und
Einstellen des oberen Stromschwellenwerts und des unteren Stromschwellenwerts auf der Grundlage der Einschaltzeit ($t_{on}$) und der Ausschaltzeit ($t_{off}$),
**dadurch gekennzeichnet, dass** sie ferner die Bestimmung einer Abweichung des Laststroms von einem nominalen durchschnittlichen Laststrom auf der Grundlage der Einschaltzeit, der Ausschaltzeit und eines Faktors umfasst, der von einer Eingangsspannung ($V_{in}$), einer Induktivität (L) einem Induktor (18) der Versorgungsstufe und einer Regelkreisverzögerung ($\tau_{loop}$) abhängig ist,
wobei die Eingangsspannung ($V_{in}$), die Induktivität (L) und die Regelkreisverzögerung ($\tau_{loop}$) konstruktionsbedingt oder durch ein Anwendungsszenario bekannt sind oder gemessen werden und ein Speicher (512) eine Nachschlagetabelle mit Faktorwerten enthält oder der Faktor im Speicher (512) programmiert ist, und
Modifizieren des oberen Stromschwellenwerts und/oder des unteren Stromschwellenwerts, indem Werte, die auf der Abweichung des Laststroms vom durchschnittlichen Nennlaststrom basieren, zum oberen Stromschwellenwert und/oder zum unteren Stromschwellenwert addiert oder davon abgezogen werden.

12. Verfahren nach Anspruch 11, das ferner die Bestimmung eines Wertes umfasst, der einen Arbeitszyklus der Versorgungsstufe (11; 16, 17, 18) auf der Grundlage der Einschaltzeit und der Ausschaltzeit angibt.

13. Verfahren nach Anspruch 11 oder 12, das ferner Folgendes umfasst:

Bestimmen einer Abfallzeit ($t_{fall}$) zwischen einem dritten Zeitpunkt (65), an dem der Laststrom ($I_{LED}$) den oberen Schwellenstrom von oben überschreitet, und einem folgenden ersten Zeitpunkt (65), einer Anstiegszeit ($t_{rise}$) von einem vierten Zeitpunkt (62; 66), an dem der Laststrom ($I_{LED}$) den unteren Stromschwellenwert von unten überschreitet, zu einem folgenden zweiten Zeitpunkt (63), und
Bestimmen des Faktors auf der Grundlage der Anstiegszeit ($t_{rise}$) und der Abfallzeit ($t_{fall}$).

14. Verfahren nach Anspruch 13, das ferner Folgendes umfasst:

Bestimmen mindestens einer Überschwingzeit ($t_{m,hi}$) zwischen einem zweiten Zeitpunkt (63) und einem folgenden dritten Zeitpunkt (64) und einer Unterschwingzeit ($t_{m,lo}$) zwischen einem ersten Zeitpunkt (65) und einem folgenden vierten Zeitpunkt (62; 66), und

Bestimmen des Faktors auf der Grundlage der Überschwingzeit ($t_{m,hi}$) und/oder der Unterschwingzeit ($t_{m,lo}$).

## Revendications

1. Organe (10 ; 15 ; 80) de commande, comprenant :

   un circuit (13 ; 50) de détection de seuil configuré pour recevoir un signal (fb) de réaction indicateur d'un courant ($I_{LED}$) de charge, et pour détecter, lorsque le courant ($I_{LED}$) de charge, tel qu'indiqué par le signal (fb) de réaction, atteint un seuil de courant supérieur ou un seuil de courant inférieur,
   un circuit (112 ; 84) de commande configuré pour commander un étage (11 ; 16, 17, 18) d'alimentation, en réaction à la détection, afin d'alimenter une charge en le courant ($I_{LED}$) de charge, et
   un circuit (83) de détection et de compensation d'une erreur de courant configuré pour déterminer un temps ($t_{on}$) de marche entre un premier point dans le temps (61), où le courant ($I_{LED}$) de charge atteint le courant de seuil inférieur par le haut, et un deuxième point dans le temps (63), où le courant ($I_{LED}$) de charge atteint le seuil de courant supérieur par le bas, et un temps ($t_{off}$) d'arrêt entre le deuxième point dans le temps (63) et un premier suivant dans le temps (65), et pour régler le seuil supérieur et le seuil de courant inférieur, sur la base du temps ($t_{on}$) de marche et du temps ($t_{off}$) d'arrêt,
   une mémoire (512),
   **caractérisé en ce que**
   le circuit (83) de détermination et de compensation d'une erreur de courant est configuré pour déterminer un écart du courant de charge à un courant de charge nominal moyen sur la base du temps de marche, du temps d'arrêt et d'un facteur dépendant d'une tension ($V_{in}$) d'entrée, d'une valeur (L) d'une inductance (18) de l'étage d'alimentation et d'un retard ($\tau_{loop}$) de boucle de commande, dans lequel, soit le circuit de détermination et de compensation du courant est configuré pour connaître la tension ($V_{in}$) d'entrée, l'inductance (L) et le retard ($\tau_{loop}$) de boucle de commande par conception, par application d'un scénario ou d'une mesure, et la mémoire (512) comprend une table de consultation comprenant des valeurs de facteur, le facteur étant programmé dans la mémoire (512), dans lequel le circuit de détermination et de compensation d'une erreur de courant est configuré pour modifier le seuil de courant supérieur et/ou le seuil de courant inférieur, en ajoutant ou en soustrayant des valeurs, lesquelles valeurs reposent sur l'écart du courant de charge au courant de charge nominal moyen au ou du seuil de courant supérieur et/ou seuil de courant inférieur.

2. Organe de commande suivant la revendication 1, dans lequel le circuit (83) de détermination et de compensation d'une erreur de courant est configuré pour déterminer une valeur indicative d'un rapport de cycle de l'étage (11 ; 16, 17, 18) d'alimentation sur la base du temps de marche et du temps d'arrêt.

3. Organe de commande suivant la revendication 1 ou 2, dans lequel le circuit (83) de détermination et de compensation d'une erreur de courant est mis en œuvre numériquement.

4. Organe de commande suivant l'une quelconque des revendications 1 à 3, dans lequel le circuit (83) de détermination et de compensation d'une erreur de courant comprend au moins un compteur (57, 58 ; 76, 77) pour déterminer le temps de marche et le temps d'arrêt.

5. Organe de commande suivant l'une quelconque des revendications 1 à 4, dans lequel le circuit de détermination et de compensation d'une erreur de courant est configuré pour déterminer l'écart du courant de charge au courant de charge nominal moyen en valeurs numériques suivant

$$\Delta I_{error,avg,LSB} = s_{comp,LSB} \cdot \frac{t_{off} - t_{on}}{t_{on} + t_{off}}$$

dans laquelle $\Delta I_{error,avg,LSB}$ est l'écart du courant de charge à un courant de charge nominal moyen en termes d'au moins un bit significatif d'un courant moyen cible et $s_{comp,LSB}$ est le facteur.

6. Organe de commande suivant l'une quelconque des revendications 1 à 4, dans lequel le circuit (83) de détermination et de compensation d'une erreur de courant est configuré pour déterminer un temps ($t_{fall}$) de descente entre un troisième point dans le temps (64), où le courant ($I_{LED}$) de charge traverse le courant de seuil supérieur par le haut et un premier point suivant dans le temps (65), un temps ($t_{rise}$) de montée à partir d'un quatrième point dans le temps (62 ; 66), où le courant ($I_{LED}$) de charge traverse le seuil de courant inférieur du bas à un deuxième point suivant dans le temps (63), et est configuré en outre pour déterminer le facteur sur la base du temps ($t_{rise}$) de montée et du temps ($t_{fall}$) de descente.

**7.** Organe de commande suivant la revendication 6, dans lequel le circuit (83) de détermination et de compensation d'une erreur de courant est configuré pour déterminer au moins l'un d'un temps ($t_{m,hi}$) de surdépassement entre un deuxième point dans le temps (63) et un troisième point suivant dans le temps (64) ou un temps ($t_{m,lo}$) de sous-dépassement entre un premier temps (61 ; 65) et un quatrième point suivant dans le temps (62 ; 66), et est configuré en outre pour déterminer le facteur sur la base du au moins l'un du temps ($t_{m,hi}$) de surdépassement et du temps ($t_{m,lo}$) de sous-dépassement.

**8.** Organe de commande suivant la revendication 7, dans lequel l'organe de commande est configuré pour déterminer le facteur sur la base en outre d'à la fois le temps de surdépassement et le temps de sous-dépassement.

**9.** Organe de commande suivant la revendication 7 ou 8, dans lequel l'organe de commande est configuré pour déterminer l'écart du courant de charge à un courant de charge nominal moyen suivant

$$\Delta I_{error,avg} = \frac{1}{4} \cdot \Delta I_{pp,LSB} \cdot \left( \frac{t_{m,hi}}{t_{fall}} + \frac{t_{m,lo}}{t_{rise}} \right) \cdot \frac{t_{off} - t_{on}}{t_{on} + t_{off}}$$

dans laquelle $\Delta I_{error,avg}$ est l'écart du courant de charge à un courant de charge nominal moyen, $\Delta I_{pp,LSB}$ est une différence entre le seuil de courant supérieur et le seuil de courant inférieur, $t_{m,hi}$ est le temps de surdépassement, $t_{m,lo}$ est le temps de sous-dépassement, $t_{fall}$ est le temps de descente, $t_{rise}$ est le temps de montée, $t_{on}$ est le temps de marche et $t_{off}$ est le temps d'arrêt.

**10.** Régulateur de commutation de mode de courant, comprenant l'organe de commande suivant l'une quelconque des revendications 1 à 9 et l'étage d'alimentation,
dans lequel l'étage d'alimentation comprend au moins un transistor (16) et l'inductance (18) connectée au transistor.

**11.** Procédé, comprenant

recevoir un signal (fb) de réaction indicateur d'un courant ($I_{LED}$) de charge,
détecter, lorsque le courant ($I_{LED}$) de charge, tel qu'indiqué par le signal (fb) de réaction, atteint un seuil de courant supérieur ou un seuil de courant inférieur,
commander un étage (11 ; 16, 17, 18) d'alimentation en réaction à la détection, afin d'alimenter une charge en le courant ($I_{LED}$) de charge,
déterminer un temps ($t_{on}$) de marche entre un premier point dans le temps (61), où le courant ($I_{LED}$) de charge atteint le courant de seuil inférieur par le haut, et un deuxième point dans le temps (63), où le courant ($I_{LED}$) de charge atteint le seuil de courant supérieur par le bas, et un temps ($t_{off}$) d'arrêt entre le deuxième point dans le temps (63) et un premier point suivant dans le temps (65), et
régler le seuil de courant supérieur et le seuil de courant inférieur sur la base du temps ($t_{on}$) de marche et du temps ($t_{off}$) d'arrêt,
**caractérisé en ce qu'**
il comprend en outre déterminer un écart du courant de charge à un courant de charge nominal moyen sur la base du temps de marche, du temps d'arrêt et d'un facteur dépendant d'une tension ($V_{in}$) d'entrée, d'une valeur (L) d'une inductance (18) de l'étage d'alimentation et d'un retard ($\tau_{loop}$) de boucle de commande, dans lequel la tension ($V_{in}$) d'entrée, l'inductance (L) et le retard ($\tau_{loop}$) de boucle de commande sont connus par conception, par application d'un scénario ou ils sont mesurés, et une mémoire (512) comprend une table de consultation comprenant des valeurs de facteur, ou le facteur est programmé dans la mémoire (512), et modifier le seuil de courant supérieur et/ou le seuil de courant inférieur en ajoutant ou en soustrayant des valeurs, lesquelles valeurs reposent sur l'écart du courant de charge au courant de charge nominal moyen au ou du seuil de courant supérieur et/ou seuil de courant inférieur.

**12.** Procédé suivant la revendication 11, comprenant en outre déterminer une valeur indicative d'un rapport de cycle de l'étage (11 ; 16, 17, 18) d'alimentation sur la base du temps de marche et du temps d'arrêt.

13. Procédé suivant la revendication 11 ou 12, comprenant en outre

déterminer un temps ($t_{fall}$) de descente entre un troisième point dans le temps (65), où le courant ($I_{LED}$) de charge traverse le courant de seuil supérieur par le haut, et un première point suivant dans le temps (65), un temps ($t_{rise}$) de montée à partir d'un quatrième point dans le temps (62 ; 66), où le courant ($I_{LED}$) de charge traverse le seuil de courant inférieur du bas à un deuxième point suivant dans le temps (63), et déterminer le facteur sur la base en outre du temps ($t_{rise}$) de montée et du temps ($t_{fall}$) de descente.

14. Procédé suivant la revendication 13, comprenant en outre déterminer au moins l'un d'un temps ($t_{m,hi}$) de surdépassement entre un deuxième point dans le temps (63) et un troisième point suivant dans le temps (64) et un temps ($t_{m,lo}$) de sous-dépassement entre un premier point (65) dans le temps et un quatrième point (62 ; 66) dans le temps suivant et déterminer le facteur sur la base en outre du au moins l'un du temps ($t_{m,hi}$) de surdépassement et du temps ($t_{m,lo}$) du sous-dépassement.

Fig. 1A

Fig. 1B

Fig. 2

Fig. 3

Fig. 4

Fig. 5

Fig. 6

EP 3 840 536 B1

Fig. 7

Fig. 8

23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016036324 A1

- US 10056828 B2